# EUROPEAN PATENT APPLICATION

(11) **EP 4 443 982 A1**
(43) Date of publication of application: **09.10.2024**
(21) Application number: 21965914.1
(22) Date of filing: 30.11.2021
(51) Int. Cl.: H04W 52/02, H04W 76/28

(54) **COMMUNICATION METHOD AND COMMUNICATION APPARATUS**

(71) Applicant: GUANGDONG OPPO MOBILE TELECOMMUNICATIONS CORP., LTD., Dongguan, Guangdong 523860 (CN)
(72) Inventor: HE, Chuanfeng, Dongguan, Guangdong 523860 (CN)
(74) Representative: Taor, Simon Edward William
(86) International application number: PCT/CN2021/134496
(87) International publication number: WO 2023/097473

(57) **Abstract**

Provided are a communication method and a communication apparatus. The method comprises: a terminal device receives an energy-saving signal, the energy-saving signal indicating discontinuous reception (DRX) information, a transmission parameter of the energy-saving signal being different from a transmission parameter of a physical channel, and the transmission parameter comprising at least one of a waveform, a modulation mode, and a coding and multiple access mode; the terminal device determines a reception state according to the DRX information. The method in the embodiments of the present application can reduce power consumption of the terminal device.

## Description

### TECHNICAL FIELD

The present disclosure relates to the technical field of communications, and more particularly to, a communication method and a communication device.

### BACKGROUND

With the development of communication technology, a discontinuous reception (DRX) mechanism has been introduced into some communication systems to reduce power consumption of a terminal device. However, the effect of introducing the DRX mechanism is not ideal.

### SUMMARY

The present disclosure provides a communication method and a communication device, which can reduce the power consumption of the terminal device.

In a first aspect, a communication method is provided. The communication method includes that: a terminal device receives a power saving signal that indicates discontinuous reception (DRX) information, where a transmission parameter of the power saving signal is different from a transmission parameter of a physical channel, and the transmission parameter includes at least one of: a waveform, a modulation mode, a coding mode or a multiple access mode; and the terminal device determines a reception state based on the DRX information.

In a second aspect, a communication method is provided. The communication method includes that: a network device sends a power saving signal that indicates discontinuous reception (DRX) information, where a transmission parameter of the power saving signal is different from a transmission parameter of a physical channel, and the transmission parameter includes at least one of: a waveform, a modulation mode, a coding mode or a multiple access mode.

In a third aspect, a communication device is provided. The communication device includes a receiving unit and a determining unit. The receiving unit is configured to receive a power saving signal that indicates discontinuous reception (DRX) information, where a transmission parameter of the power saving signal is different from a transmission parameter of a physical channel, and the transmission parameter includes at least one of: a waveform, a modulation mode, a coding mode or a multiple access mode. The determining unit is configured to determine a reception state based on the DRX information.

In a fourth aspect, a communication device is provided. The communication device includes a sending unit, configured to send a power saving signal that indicates discontinuous reception (DRX) information, where a transmission parameter of the power saving signal is different from a transmission parameter of a physical channel, and the transmission parameter includes at least one of: a waveform, a modulation mode, a coding mode or a multiple access mode.

In a fifth aspect, a communication device is provided. The communication device includes a memory configured to store a program and a processor configured to invoke the program from the memory, to perform the method in the first aspect.

In a sixth aspect, a communication device is provided. The communication device includes a memory configured to store a program and a processor configured to invoke the program from the memory, to perform the method in the second aspect.

In a seventh aspect, there is provided a communication device including a processor configured to invoke a program from a memory to perform the method in the first aspect.

In an eighth aspect, there is provided a communication device including a processor configured to invoke a program from a memory to perform the method in the second aspect.

In a ninth aspect, there is provided a chip including a processor configured to invoke a program from a memory, to enable a device on which the chip is mounted to perform the method in the first aspect.

In a tenth aspect, there is provided a chip including a processor configured to invoke a program from a memory, to enable a device on which the chip is mounted to perform the method in the second aspect.

In an eleventh aspect, there is provided a computer-readable storage medium having stored thereon a program, where the program causes a computer to perform the method in the first aspect.

In a twelfth aspect, there is provided a computer-readable storage medium having stored thereon a program, where the program causes a computer to perform the method in the second aspect.

In a thirteenth aspect, there is provided a computer program product including a program that causes a computer to perform the method in the first aspect.

In a fourteenth aspect, there is provided a computer program product including a program that causes a computer to perform the method in the second aspect.

In a fifteenth aspect, there is provided a computer program causing a computer to perform the method in the first aspect.

In a sixteenth aspect, there is provided a computer program causing a computer to perform the method in the second aspect.

In the embodiments of the present disclosure, a transmission parameter of the power saving signal is different from a transmission parameter of a physical channel. After receiving the power saving signal, the terminal device can timely determine the reception state based on the DRX information indicated through the power saving signal, thereby reducing the power consumption of the terminal device.

### BRIEF DESCRIPTION OF THE DRAWINGS

FIG. 1 is an example diagram of a wireless communication system to which embodiments of the present disclosure are applied.
FIG. 2 is an example diagram of a DRX cycle in an embodiment of the present disclosure.
FIG. 3 is an example diagram of a terminal device switching a DRX cycle in an embodiment of the present disclosure.
FIG. 4 is an example diagram of a receiver system in an embodiment of the present disclosure.
FIG. 5 is a schematic flowchart of a communication method according to an embodiment of the present disclosure.
FIG. 6 is an example diagram of a terminal device entering into a DRX state in an embodiment of the present disclosure.
FIG. 7 is an example diagram of a terminal device switching a DRX state in an embodiment of the present disclosure.
FIG. 8 is an example diagram of a terminal device switching a DRX state in another embodiment of the present disclosure.
FIG. 9 is an example diagram of a terminal device determining a reception state during an on duration in an embodiment of the present disclosure.
FIG. 10 is a schematic structural diagram of a communication device according to an embodiment of the present disclosure.
FIG. 11 is a schematic structural diagram of a communication device according to another embodiment of the present disclosure.
FIG. 12 is a schematic structural diagram of a device according to an embodiment of the present disclosure.

### DETAILED DESCRIPTION

The technical solution of the present disclosure will be described in conjunction with the accompanying drawings.

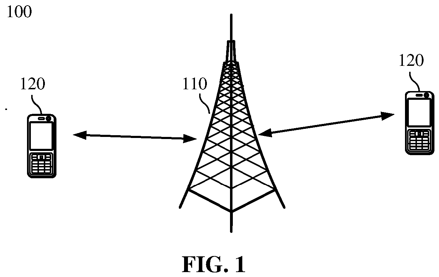

FIG. 1 illustrates a wireless communication system 100 to which embodiments of the present disclosure are applied. The wireless communication system 100 may include a network device 110 and user equipment (UE) 120. The network device 110 may communicate with the UE 120. The network device 110 may provide communication coverage for a particular geographic area and may communicate with the UE 120 located within the coverage. The UE 120 may access a network (e.g., a wireless network) through the network device 110.

FIG. 1 exemplarily illustrates one network device and two UEs. In some implementations, the communication system 100 may include multiple network devices, and other numbers of terminal devices may be included in the coverage of each network device, which is not limited by the embodiments of the present disclosure. Optionally, the communication system 100 may also include other network entities, such as, network controllers, mobility management entities, etc., which are not limited by the embodiments of the present disclosure.

It is to be understood that the technical solutions of the embodiments of the present disclosure may be applied to various communication systems, such as: a 5th generation (5G) system or a new radio (NR) system, a long term evolution (LTE) system, a LTE frequency division duplex (FDD) system, a LTE time division duplex (TDD) system, etc. The technical solutions provided by the present disclosure may also be applied to future communication systems, such as a 6th generation mobile communication system, a satellite communication system, etc.

The UE in the embodiments of the present disclosure may also be referred to a terminal device, an access terminal, a subscriber unit, a subscriber station, a mobile station (MS), a mobile terminal (MT), a remote station, a remote terminal, a mobile device, a user terminal, a terminal, a wireless communication device, a user agent or a user device. The UE in the embodiments of the present disclosure may be a device that provides voice and/or data connectivity to a user, and may be used to connect people, objects and machines, such as a handheld device with wireless connection function, a vehicle-mounted device, etc. The UE in the embodiments of the present disclosure may be a mobile phone, a tablet computer (or Pad), a notebook computer, a palmtop computer, a mobile internet device (MID), a wearable device, a virtual reality (VR) device, an augmented reality (AR) device, a wireless terminal in industrial control, a wireless terminal in self driving, a wireless terminal in remote medical surgery, a wireless terminal in smart grid, a wireless terminal in transportation safety, a wireless terminal in smart city, or a wireless terminal in smart home, etc. Optionally, the UE may be used to act as a base station. For example, the UE may act as a scheduling entity that provides sidelink signals between UEs in the vehicle to everything (V2X), the device to device (D2D) or the like. For example, a cellular phone communicates with a car using the sidelink signals. The cellular phone communicates with the device in smart home without relaying communication signals by the base station.

The network device in the embodiments of the present disclosure may be a device configured to communicate with a UE, and the network device may also be referred to as an access network device or a radio access network device, for example, the network device may be a base station. The network device in the embodiments of the present disclosure may refer to a radio access network (RAN) node (or device) that accesses a UE to a wireless network. The base station may broadly cover or be replaced with following names, such as, Node B (NodeB), evolved NodeB (eNB), next generation NodeB (gNB), relay station, access point, transmitting and receiving point (TRP), transmitting point (TP), master eNB (MeNB), secondary eNB (SeNB), multi-standard radio (MSR) node, home base station, network controller, access node, wireless node, access Point (AP), transmission node, transceiver node, base band unit (BBU), remote radio unit (RRU), active antenna unit (AAU), remote radio head (RRH), central unit (CU), distributed unit (DU), positioning node, etc. The base station may be a macro base station, a micro base station, a relay node, a donor node or a combination thereof.

In some embodiments, the network device may be fixed or mobile. For example, a helicopter or unmanned aerial vehicle may be configured to act as a mobile network device, and one or more cells may be moved according to the location of the mobile network device. In other examples, the helicopter or unmanned aerial vehicle may be configured to function as a device that communicates with another network device. In some embodiments, the network device may be a CU or a DU, or the network device may include a CU and a DU, or the network device may also include an AAU.

It should be understood that the network device may be deployed on land, including an indoor or outdoor device, a hand-held device or a vehicle-mounted device. The network device may also be deployed on the water surface. The network device may also be deployed in airplanes, in balloons and in satellites in the air. The scenario to which the embodiments of the present disclosure apply and where the network device is located are not limited in the embodiment of the present disclosure.

It should also be understood that all or part of the functions of the network device and UE in the present disclosure may also be implemented by software functions running on the hardware or by virtualized functions instantiated on a platform (e.g., a cloud platform).

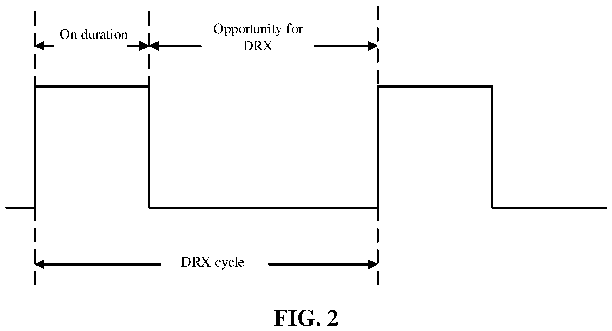

The DRX mechanism is introduced into some communication systems, so that the UE may not turn on the receiver all the time in a case where the UE has no data to be received, but enters into a DRX state, thus achieving the purpose of saving power. Under the DRX mechanism, a DRX cycle may be configured for the UE in a connected state (RRC_CONNECTED). As illustrated in FIG. 2, a DRX cycle may include on duration and an opportunity for DRX. For example, the on duration may be a time range where a timer does not expire, i.e., the time range within which the timer is running. The timer may be drx-onDurationTimer, drx-InactivityTimer, drx-RetransmissionTimerDL, drx-RetransmissionTimerUL, or ra-ContentionResolutionTimer, etc. During the on duration, the UE may be in a continuous reception state, i.e., the UE may listen to and receive downlink channels and signals including the physical downlink control channel (PDCCH). During the opportunity for DRX, the UE may not receive the downlink channels and signals, such as the PDCCH, to reduce the power consumption.

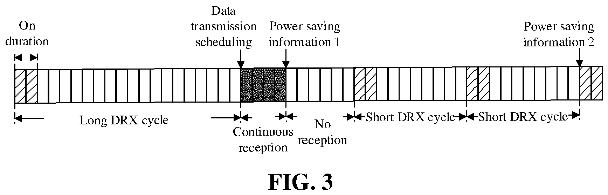

UE may adaptively perform the DRX according to an actual scheduling situation, so as to achieve the purpose of saving power. The DRX cycle of the UE may also be configured to be a short DRX cycle and a long DRX cycle. For example, when the UE is in the short DRX cycle, a timer (for example, the timer drxShortCycleTimer illustrated in FIG. 3) will be started or restarted according to the reception situation of data scheduling. When the timer expires, the short DRX cycle may be switched into a long DRX cycle with larger intervals to further save the power. Moreover, the network may also switch the UE into being in a short DRX cycle or a long DRX cycle through a DRX command. The DRX command may be sent to the UE through a media access control control element (MAC CE) message.

The procedure of switching the DRX cycle is illustrated in FIG. 3, it is assumed that the UE is configured with the short DRX cycle and the long DRX cycle. As shown in FIG. 3, the UE is in a long DRX cycle state at an initial stage, and when the UE receives the data transmission scheduling, the timer drx-InactivityTimer is started (or restarted). When the drx-InactivityTimer expires or the UE receives a MAC CE message carrying the DRX command, the UE enters into the short DRX cycle state and simultaneously starts the timer drxShortCycleTimer. When the drxShortCycleTimer expires or the UE receives a MAC CE message carrying the long DRX command, the UE enters into the long DRX cycle state.

However, in the existing DRX mechanism, the DRX state is switched based on the DRX command (carried in MAC CE message) and the timer, which has the problems of long delay and high power consumption, and is not conducive to further power saving of UE. For example, before the timer drx-InactivityTimer expires, the UE needs to detect the PDCCH all the time; and before the timer drxShortCycleTimer expires, the UE also needs to perform the DRX all the time according to the short DRX cycle, which may increase unnecessary power consumption. When the DRX command is carried in the MAC CE message, a physical downlink shared channel (PDSCH) is required to be scheduled through the PDCCH to transmit the MAC CE message, which will bring the delay, and UE needs to consume extra power to receive the MAC CE message.

In order to solve one or more of the above technical problems, the present disclosure provides a communication method and a communication device. In the embodiments of the present disclosure, the transmission parameter of the power saving signal is different from the transmission parameter of the physical channel. After the terminal device receives the power saving signal, the terminal device may timely determine the reception state based on the DRX information indicated by the power saving signal, thereby reducing the power consumption of the terminal device.

In order to facilitate understanding of the solutions of the present disclosure, the power saving signal used in the embodiments of the present disclosure are firstly described below.

The power saving signal used in the embodiments of the present disclosure is different from the physical channel (e.g., PDCCH or PDSCH etc.) in the related art. Optionally, the transmission parameter of the power saving signal is different from the transmission parameter of the physical channel, and the transmission parameter herein may include at least one of: a waveform, a modulation mode, a coding mode or a multiple access mode.

For example, the modulation mode of the power saving signal may include any one of: amplitude shift keying (ASK) modulation, frequency shift keying (FSK) modulation or phase shift keying (PSK) modulation. In the related art, the modulation mode of the physical channel may generally include any one of: orthogonal frequency division multiplexing (OFDM) modulation, quadrature phase shift keying (QPSK) modulation or quadrature amplitude modulation (QAM).

For another example, the coding mode of the power saving signal may include any one of: non-return-to-zero inverted (NRZI) coding, Manchester coding, uni-polar RZ coding, differential bi-phase (DBP) coding, Miller coding or differential coding. In the related art, the coding mode of the physical channel may generally include any one of: Reed-Muller (RM) code, Tail biting conventional coding (TBCC), Turbo code, outer code, low density parity check code (LDPC) or Polar code.

For another example, the multiple access mode of the power saving signal includes any one of: frequency division multiple access (FDMA), time division multiple access (TDMA) or code division multiple access (CDMA). However, in the related art, the multiple access mode of the physical channel may generally include any one of: orthogonal frequency division multiple access (OFDMA) or discrete Fourier transform-spread-orthogonal frequency division multiplexing (DFTS-OFDM).

Further, the transmission mode of the power saving signal may be different from the transmission mode of the physical channel. Optionally, when receiving the physical channel in the related art, the terminal device needs to actively perform detection on a time-frequency resource corresponding to the physical channel to determine whether the network device sends the physical channel. Different from the physical channel in the related art, the terminal device does not need to actively perform the detection when receiving the power saving signal, and the power saving signal will trigger the terminal device to receive the power saving signal when the power saving signal arrives within a preset range of the terminal device. In other words, when the power saving signal arrives within the preset range of the terminal device, the terminal device may passively sense the power saving signal, so as to receive the power saving signal. According to the embodiment of the present disclosure, based on this characteristic of the power saving signal, the terminal device may receive the DRX information indicated by the power saving signal at any time, so that the terminal device may timely determine the reception state based on the DRX information, thereby reducing the power consumption of the terminal device.

Optionally, the terminal device may receive the power saving signal using a wake-up receiver. When the power saving signal approaches the wake-up receiver, the wake-up receiver will be triggered to receive the power saving signal. For example, when the power saving signal is within the near-field range formed by an antenna of the wake-up receiver, the antenna of the wake-up receiver may generate an electromagnetic field through electromagnetic induction and generate an induced current. The induced current may drive the wake-up receiver, so that the wake-up receiver receives the power saving signal. In this procedure, the wake-up receiver does not need to actively perform the detection, and may receive the power saving signal in a passive manner. Accordingly, the network device may also use a transmitter corresponding to the wake-up receiver to generate and send the power saving signal.

The wake-up receiver may also be a low-power-consumption (or very low-power) receiver or a zero-power-consumption receiver. That is to say, the power consumption of the wake-up receiver may be much lower than the power consumption of a receiver receiving the physical channel used by the terminal device in the related art. For example, the wake-up receiver may collect (for example, by using back scattering communication or other technologies) the energy of electromagnetic waves in the electromagnetic field to power the wake-up receiver, so that the low-power-consumption reception or the zero-power-consumption reception (battery-free) can be realized. Thus, the power for receiving the power saving signal consumed by the terminal device is less than (or far less than) the power for receiving the physical channel consumed by the terminal device in the related art.

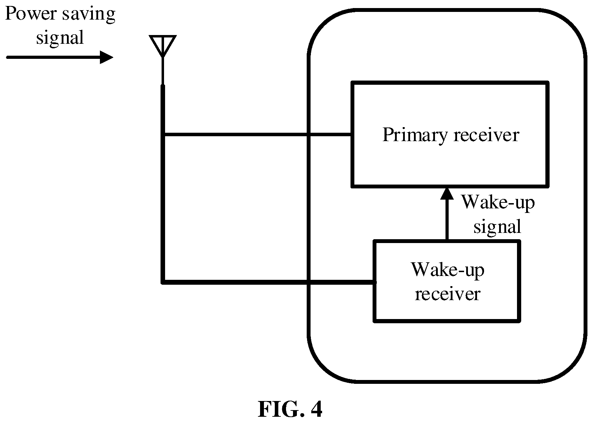

FIG. 4 is an example of a receiver system of a terminal device in an embodiment of the present disclosure. As illustrated in FIG. 4, the terminal device may be provided with a primary receiver configured to receive the physical channel in the related art and a wake-up receiver configured to receive the aforementioned power saving signal. When the primary receiver is in an off state, the wake-up receiver may receive the power saving signal at any time, and send a wake-up signal to the primary receiver to turn on the primary receiver in a case where the terminal device is required to turn on the primary receiver.

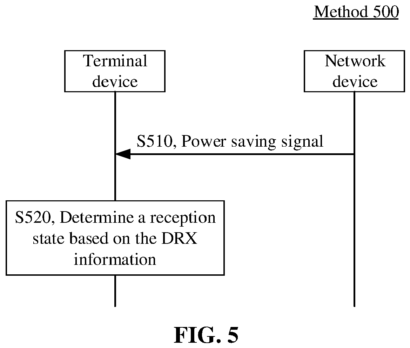

The power saving signal and the wake-up receiver for receiving the power saving signal have been described in the foregoing embodiments, and the communication method in the embodiment of the present disclosure will be described in detail with reference to FIG. 5 to FIG. 9.

FIG. 5 is a schematic flowchart of a communication method according to an embodiment of the present disclosure. The method 500 illustrated in FIG. 5 may include operations S510 and S520.

In S510, a network device sends a power saving signal to a terminal device.

The power saving signal may be the power saving signal mentioned in the foregoing embodiments, and the power saving signal may indicate DRX information. Optionally, the DRX information may include: information associated with a reception state of the DRX (e.g., turning on or turning off the primary receiver), information associated with a DRX cycle (e.g., switching into a long DRX cycle or a short DRX cycle), and/or information associated with an on duration within the DRX cycle (e.g., whether the primary receiver is turned on during a target on duration), etc.

Optionally, the DRX information may instruct the terminal device to enter into a DRX state (the DRX state may mean that the terminal device is dormancy, or that the terminal device turns off the receiver). In other words, the DRX information may instruct the terminal device to enter into an inactive state or turn off the receiver (e.g., turn off the primary receiver). For example, the power saving signal may include a DRX command that may instruct the terminal device to enter into the DRX state.

Optionally, the DRX information may instruct the terminal device to switch (or adjust) a DRX cycle, or the DRX information may instruct the terminal device to determine the DRX cycle. For example, the power saving signal may include a long DRX command, and the long DRX command may instruct the terminal device to switch into a long DRX cycle state.

Optionally, the DRX information may instruct the terminal device to enter into a continuous reception state. In other words, the DRX information may instruct the terminal device to turn on the receiver (e.g., turn on the primary receiver). For example, the power saving signal may include a DRX off command, and the DRX off command may be a newly added command used for instructing the terminal device to enter into the continuous reception state.

Optionally, the DRX information may indicate whether the terminal device monitors a PDCCH during the target on duration. Alternatively, the DRX information may indicate whether the terminal device turns on the receiver (e.g., turns on the primary receiver) during the target on duration. For example, the power saving signal may include a wake-up signal, and the wake-up signal indicates whether the terminal device monitors the PDCCH during the target on duration. Optionally, the definition of the wake-up signal may be similar to that of the wake-up signal carried in downlink control information (DCI) format 2_6 introduced in release 16 (R16) of the communication standard.

It should be noted that in the embodiment of the present disclosure, the target on duration may be an on duration in any one DRX cycle located after the power saving signal in the time domain, or may be an on duration within a DRX cycle where the power saving signal is located. Optionally, the target on duration may also include multiple on durations within any number of DRX cycles located after the power saving signal in the time domain, and/or may be on durations within the DRX cycle where the power saving signal is located.

In S520, the terminal device determines a reception state based on the DRX information.

The reception state herein may mean that the terminal device enters into the DRX state or the continuous reception state. Optionally, the reception state may also mean that the terminal device switches into the long DRX cycle state or the short DRX cycle state. Optionally, the reception state may also mean whether the terminal device monitors the PDCCH during the target on duration.

In the embodiment of the present disclosure, depending on the DRX information, the implementations of the terminal device determining the reception state may include the following cases.

In a first case, the DRX information instructs the terminal device to enter into the DRX state.

Optionally, the terminal device may enter into the DRX state based on the DRX information. In this case, the DRX information may be the DRX command.

In the existing DRX mechanism, the switching of the DRX state needs to be based on the timer drx-InactivityTimer or the MAC CE message, and the network device cannot switch the DRX state at any time to quickly adjust the DRX state of the UE to achieve a better power saving effect. In the embodiment of the present disclosure, the terminal device may receive the power saving signal at any time and adjust the DRX state of the terminal device based on the indication of the DRX information in the power saving signal, thereby effectively reducing the power consumption of the terminal device.

Furthermore, the terminal device may use the wake-up receiver to receive the power saving signal. Since the power consumption for the wake-up receiver to receive the power saving signal is extremely low (or zero), the power consumption of the terminal device may also be effectively reduced.

In some possible implementations, the terminal device may enter into a first cycle state based on the DRX information.

In some possible implementations, if the terminal device is configured with a second cycle, the terminal device may enter into a second cycle state based on the DRX information.

The second cycle may be less than a first cycle. Optionally, the first cycle may be the long DRX cycle and the second cycle may be the short DRX cycle.

For example, after the terminal device receives the power saving signal, if the terminal device is not configured with the short DRX cycle, the terminal device may enter into the DRX state based on the DRX information and directly switch into the long DRX cycle; if the terminal device is configured with the short DRX cycle, the terminal device may enter into the DRX state based on the DRX information and switch into the short DRX cycle.

Optionally, the power saving signal may also be used in conjunction with a timer. For example, after the terminal device receives the power saving signal, if the terminal device is configured with the short DRX cycle, the terminal device may enter into the DRX state based on the DRX information, switch into the short DRX cycle, and simultaneously start (or restart) the timer drxShortCycleTimer; if the timer drxShortCycleTimer expires, the terminal device may switch into the long DRX cycle state. Optionally, if the terminal device receives the DRX information (used for instructing the terminal device to switch the DRX cycle) described in second case below, the terminal device may switch into the long DRX cycle state.

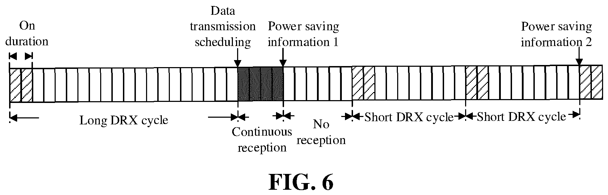

The procedure of the terminal device entering into the DRX state based on the DRX information is described in detail below in conjunction with FIG. 6.

As illustrated in FIG. 6, the terminal device is in the long DRX cycle state at the initial stage, and when the data transmission scheduling is received, the terminal device exits the long DRX cycle state to perform data reception, and simultaneously starts (or restarts) the timer drx-InactivityTimer. After the terminal device receives power saving information 1 (DRX information carried in the power saving information/signal 1 may instruct the terminal device to enter into the DRX state), the terminal device may directly enter into the short DRX cycle state without waiting for the timer drx-Inactivity Timer to expire. In this way, the power consumption caused by unnecessary PDCCH detection can be reduced, thus effectively reducing the power consumption of terminal device.

In a second case, the DRX information instructs the terminal device to switch the DRX cycle.

Optionally, the terminal device may determine the DRX cycle based on the DRX information. In this case, the DRX information may be the long DRX command.

In some possible implementations, the terminal device may switch from a second cycle state into a first cycle state based on the DRX information. Optionally, the terminal device may switch from the first cycle state into the second cycle state based on the DRX information.

For example, the terminal device may switch from the short DRX cycle state into the long DRX cycle state based on the DRX information. Optionally, the terminal device may switch from the long DRX cycle state into the short DRX cycle state based on the DRX information.

The procedure of the terminal device switching the DRX cycle based on the DRX information is described in detail below with reference to FIG. 6.

As illustrated in FIG. 6, the terminal device is in the long DRX cycle state at the initial stage, and when the data transmission scheduling is received, the terminal device exits the long DRX cycle state to perform data reception, and simultaneously starts (or restarts) the timer drx-InactivityTimer. When the terminal device is in the short DRX cycle state, power saving information 2 is received (DRX information carried in the power saving signal 2 may instruct the terminal device to switch the DRX cycle). In this case, the terminal device may switch from the short DRX cycle state into the long DRX cycle state. In this way, the terminal device may switch into the long DRX cycle state without waiting for the drxShortCycleTimer to expire, thus effectively reducing the power consumption of the terminal device.

In a third case, the DRX information instructs the terminal device to enter into a continuous reception state.

The DRX information may be a DRX off command used for instructing the terminal device to enter into the continuous reception state.

The terminal device may enter into the continuous reception state based on the DRX information. It should be noted that entering into the continuous reception state herein may mean entering into the continuous reception state based on the indication of DRX information, instead of entering the on duration.

In the related art, if the terminal device has data to be transmitted within the opportunity for DRX of the DRX cycle, the network device needs to wait until the on duration arrives, then the network device schedules the data transmission, but cannot schedule within the opportunity for DRX, which because the terminal device is in the DRX state within the opportunity for DRX and does not receive the scheduling from the network device, thus causing certain delay in the data transmission. Different from the related art, in the embodiment of the present disclosure, the terminal device may receive the power saving signal sent by the network device at any time and enter into the continuous reception state based on the indication of the power saving signal. Therefore, the terminal device may perform the data transmission at any time, instead of having to wait until the on duration arrives to receive the data scheduling from the network device, thus effectively reducing the delay in the data transmission.

For example, after the terminal device receives the DRX information, the terminal device may immediately enter into the continuous reception state and start a timer (e.g., the timer drx-onDurationTimer or the timer drx-InactivityTimer) based on the DRX information. During the running of the timer (i.e., before the timer expires), the terminal device performs the continuous reception. If the PDCCH is received during running of the timer, the timer may be restarted. When the timer expires, the terminal device may enter into the DRX state.

In some possible implementations, after the terminal device enters into the continuous reception state based on the DRX information, the terminal device may also acquire first information and enter into the DRX state based on the first information. The first information may instruct the terminal device to enter into the DRX state.

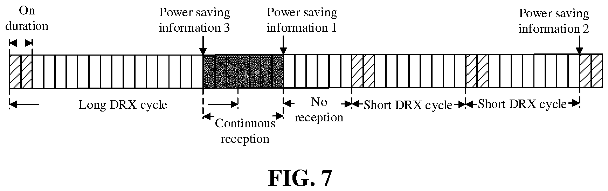

For example, as illustrated in FIG. 7, the UE may receive the power saving information 3 during the on duration (DRX information carried in the power saving information/signal 3 may instruct the terminal device to enter into the continuous reception state), thereby triggering the terminal device to enter into the continuous reception state (turn on the primary receiver to monitor the PDCCH). Furthermore, after the data transmission is completed, the network device may also instruct the terminal device to re-enter into the DRX state through the power saving information 1 (i.e., the first information) in the above first case.

In some possible implementations, after the terminal device enters into the continuous reception state based on the DRX information, the terminal device may also acquire second information and enter into the long DRX cycle state based on the second information. The second information may instruct the terminal device to switch the DRX cycle.

For example, as illustrated in FIG. 7, the terminal device may re-enter into the DRX state based on the indication of the power saving information 1 (i.e., the first information). If the terminal device enters into the short DRX cycle state, the network device may also instruct the terminal device to further enter into the long DRX cycle state through the power saving information 2 (i.e., the second information) in the above second case.

In some possible implementations, after the terminal device enters into the continuous reception state based on the DRX information, the terminal device may also enter into the DRX state after a preset duration.

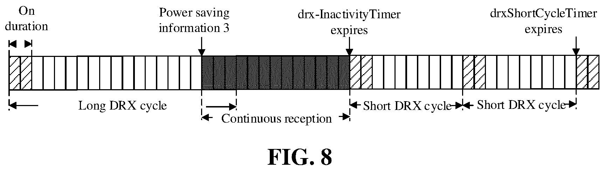

For example, as illustrated in FIG. 8, the terminal device may also start the timer drx-InactivityTimer after receiving the power saving information 3. The terminal device may perform the continuous reception until the timer expires. After the timer expires, the terminal device may enter into the DRX state. If the terminal device enters into the short DRX cycle state, the timer drxShortCycleTimer may also be started and the terminal device may enter into the long DRX cycle state after the drxShortCycleTimer expires.

In a fourth case, the DRX information indicates whether the terminal device monitors the PDCCH during the target on duration.

If the DRX information indicates that the terminal device monitors the PDCCH during the target on duration, the terminal device may enter into the continuous reception state during the target on duration. If the DRX information indicates that the terminal device does not monitor the PDCCH during the target on duration, the terminal device may maintain the DRX state during the target on duration.

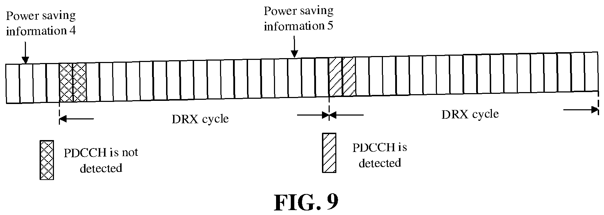

For example, as illustrated in FIG. 9, before the on duration of the first DRX cycle, the terminal device may receive power saving information 4 (DRX information carried in the power saving information/signal 4 may instruct the terminal device not to monitor the PDCCH during the target on duration), and the power saving information 4 may instruct the terminal device not to start the timer drx-onDurationTimer during the first on duration, i.e., not to perform the PDCCH detection. Before the on duration of the second DRX cycle, the terminal device may receive power saving information 5 (DRX information carried in the power saving information/signal 5 may instruct the terminal device to monitor the PDCCH during the target on duration), and the power saving information 5 may instruct the terminal device to start the timer drx-onDurationTimer during the second on duration, i.e., perform the PDCCH detection.

In the embodiment of the present disclosure, the transmission parameter of the power saving signal is different from the transmission parameter of the physical channel. After the terminal device receives the power saving signal, the terminal device may timely determine the reception state based on the DRX information indicated through the power saving signal, thereby reducing the power consumption of the terminal device.

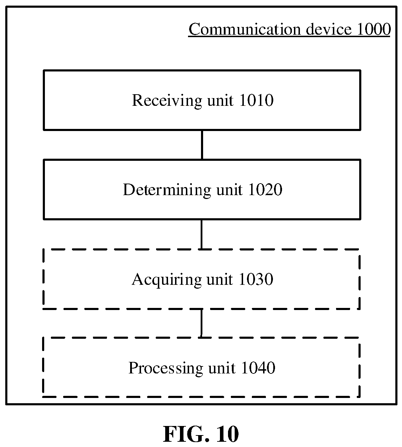

The method embodiments of the present disclosure are described in detail above with reference to FG. 5 to FIG. 9, and device embodiments of the present disclosure are described in detail below with reference to FIG. 10 to FIG. 12. It should be understood that the description of the method embodiments correspond to the description of the device embodiments and therefore portions not described in detail in the device embodiments may refer to the preceding method embodiments.

FIG. 10 is a schematic structural diagram of a communication device according to an embodiment of the present disclosure. As illustrated in FIG. 10, the communication device 1000 includes a receiving unit 1010 and a determining unit 1020.

The receiving unit 1010 is configured to receive a power saving signal that indicates DRX information, where a transmission parameter of the power saving signal is different from a transmission parameter of a physical channel, and the transmission parameter includes at least one of: a waveform, a modulation mode, a coding mode or a multiple access mode.

The determination unit 1020 is configured to determine a reception state based on the DRX information.

Optionally, the modulation mode of the power saving signal includes any one of: ASK modulation, FSK modulation or PSK modulation.

Optionally, the coding mode of the power saving signal includes any one of: NRZI coding, Manchester coding, uni-polar RZ coding, DBP coding, Miller coding or differential coding.

Optionally, the multiple access mode of the power saving signal includes any one of: FDMA, TDMA or CDMA.

Optionally, the DRX information instructs the device to enter into a DRX state, and the determining unit 1020 is specifically configured to enter into the DRX state based on the DRX information.

Optionally the determining unit 1020 is specifically configured to enter into a first cycle state based on the DRX information.

Optionally, the determining unit 1020 is specifically configured to: if the device is configured with a second cycle, enters into a second cycle state based on the DRX information, where the second cycle is less than a first cycle.

Optionally, the DRX information indicates a DRX command.

Optionally, the DRX information instructs the device to switch a DRX cycle, and the determination unit 1020 is specifically configured to determine the DRX cycle based on the DRX information.

Optionally, the determining unit 1020 is specifically configured to switch from a second cycle state into a first cycle state based on the DRX information, where a second cycle is less than a first cycle.

Optionally, the DRX information indicates a long DRX command.

Optionally, the first cycle is a long DRX cycle and the second cycle is a short DRX cycle.

Optionally, the DRX information instructs the device to enter into a continuous reception state, and the determining unit 1020 is specifically configured to enter into the continuous reception state based on the DRX information.

Optionally, the device further includes an acquiring unit 1030 and a processing unit 1040. The acquiring unit 1030 is configured to acquire first information that instructs the device to enter into a DRX state, and the processing unit 1040 is configured to enter into the DRX state based on the first information.

Optionally, the device further includes an acquiring unit 1030 and a processing unit 1040. The acquiring unit 1030 is configured to acquire second information that instructs the device to switch a DRX cycle, and the processing unit 1040 is configured to enter into a long DRX cycle state based on the second information.

Optionally, the device further includes a processing unit 1040 configured to enter into a DRX state after a preset duration.

Optionally, the DRX information indicates whether the device monitors a PDCCH during a target on duration, and the determining unit 1020 is specifically configured to: if the DRX information indicates that the terminal device monitors the PDCCH during the target on duration, enter into a continuous reception state within the target on duration; and if the DRX information indicates that the terminal device does not monitor the PDCCH during the target on duration, maintain the DRX state during the target on duration.

Optionally, power for receiving the power saving signal consumed by the device is less than power for receiving the physical channel consumed by the device.

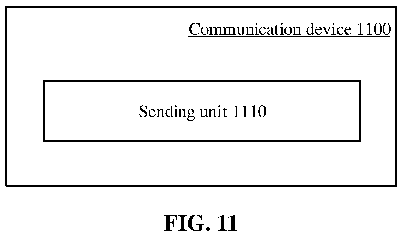

FIG. 11 is a schematic structural diagram of a communication device according to an embodiment of the present disclosure. The communication device 1100 in FIG. 11 includes a sending unit 1110.

The sending unit 1110 is configured to send a power saving signal that indicates DRX information, where a transmission parameter of the power saving signal is different from a transmission parameter of a physical channel, and the transmission parameter includes at least one of: a waveform, a modulation mode, a coding mode or a multiple access mode.

Optionally, the modulation mode of the power saving signal includes any one of: ASK modulation, FSK modulation or PSK modulation.

Optionally, the coding mode of the power saving signal includes any one of: NRZI coding, Manchester coding, uni-polar RZ coding, DBP coding, Miller coding or differential coding.

Optionally, the multiple access mode of the power saving signal includes any one of: FDMA, TDMA or CDMA.

Optionally, the DRX information instructs a terminal device to enter into a DRX state.

Optionally, the DRX information indicates a DRX command.

Optionally, the DRX information instructs the terminal device to switch a DRX cycle.

Optionally, the DRX information indicates a long DRX command.

Optionally, the DRX information instructs a terminal device to enter into a continuous reception state.

Optionally, the DRX information indicates whether a terminal device monitors a PDCCH during a target on duration.

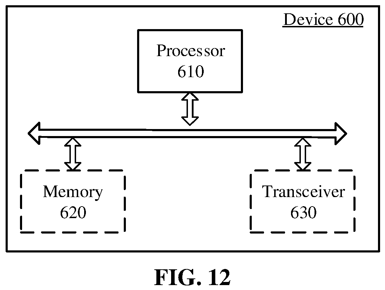

FIG. 12 is a schematic structural diagram of a device according to an embodiment of the present disclosure. The dotted line in FIG. 12 indicates that the units or modules are optional. The device 600 may be configured to implement the method described in the above method embodiments. The device 600 may be a chip or a communication device.

The device 600 may include one or more processors 610. The processor 610 may support the device 600 to implement the methods described in the method embodiments. The processor 610 may be a general purpose processor or a special purpose processor. For example, the processor may be a Central Processing Unit (CPU). Optionally, the processor may also be other general purpose processors, digital signal processor (DSP), application specific integrated circuit (ASIC), field programmable gate array (FPGA) or other programmable logic devices, discrete gate or transistor logic devices, discrete hardware components, and the like. The general purpose processor may be a microprocessor or the processor may be any conventional processor or the like.

The device600 may also include one or more memories 620. The memory 620 stores programs that can be executed by the processor 610 such that the processor 610 performs the methods described in the method embodiments. The memory 620 may be independent of or integrated into the processor 610.

The device 600 may also include a transceiver 630. The processor 610 may communicate with other devices or chips through the transceiver 630. For example, the processor 610 may send data to and receive data from other devices or chips through the transceiver 630.

The embodiment of the present disclosure also provides a computer-readable storage medium configured to store programs. The computer-readable storage medium may be applied to the communication device provided by the embodiment of the present disclosure, and the programs cause a computer to perform the methods performed by the communication device in the various embodiments of the present disclosure.

The embodiment of the present disclosure also provides a computer program product. The computer program product includes programs. The computer program product may be applied to the communication device provided by the embodiment of the present disclosure, and the programs cause a computer to perform the methods performed by the communication device in various embodiments of the present disclosure.

The embodiment of the present disclosure also provides a computer program. The computer program may be applied to the communication device provided by the embodiment of the present disclosure, and the computer program causes the computer to perform the methods performed by the communication device in the various embodiments of the present disclosure.

It should be understood that, in the embodiments of the present disclosure, the expression "B corresponding to A" means that B is associated with A and B may be determined according to A. It should also be understood, however, the meaning that B may be determined according to A does not mean that B is determined according to A alone, but may also be determined according to A and/or other information.

It should be understood that the term "and/or" is only to describe an association relationship between associated objects and represents that three kinds of relationships may exist. For example, A and/or B may represent three conditions: i.e., independent existence of A, existence of both A and B and independent existence of B. In addition, the character "/" in the present disclosure generally indicates that the associated objects before and after this character is in an "or" relationship.

It should be understood that, in various embodiments of the present disclosure, the sequence numbers of the above processes do not imply the sequence of execution, and the sequence of execution of each process should be determined according to its functions and internal logic, and should not constitute any limitation on the implementation process of the embodiments of the present disclosure.

In the several embodiments provided in the disclosure, it should be understood that the disclosed system, apparatus, and method may be implemented in other modes. For example, the apparatus embodiment described above is only schematic, and for example, division of the units is only logic function division, and other division manners may be adopted during practical implementation. For example, multiple units or components may be combined or integrated into another system, or some characteristics may be neglected or not executed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate components may or may not be physically separated, and the components displayed as units may or may not be physical units, and may be located in one place or may be distributed over multiple network units. Some or all of the units may be selected according to actual needs to achieve the objectives of the solutions of the embodiments.

In addition, functional units in various embodiments of the disclosure may be integrated into one processing unit, or each of the units may be physically separated, or two or more units may be integrated into one unit.

The above-described embodiments may be implemented in whole or in part by software, hardware, firmware or any combination thereof. When implemented in software, they may be implemented in whole or in part in the form of a computer program product. The computer program product includes one or more computer instructions. When the computer program instructions are loaded and executed on a computer, the flows or functions according to the embodiments of the disclosure are generated in whole or in part. The computer may be a general purpose computer, a dedicated computer, a computer network, or other programmable devices. The computer instructions may be stored in a computer-readable storage medium or transmitted from one computer-readable storage medium to another. For example, the computer instructions may be transmitted from one Web site, computer, server, or data center to another Web site, computer, server, or data center in a wired (e.g., coaxial cable, optical fiber, digital subscriber line (DSL)) manner or wireless (e.g., infrared, wireless, microwave, etc.) manner. The computer-readable storage medium may be any available medium that a computer may access or a data storage device such as a server, a data center, or the like that contains one or more integrations of available medium. The available medium may be magnetic medium (e.g., floppy disk, hard disk, magnetic tape), optical medium (e.g., DVD), or semiconductor medium (e.g., solid state disk (SSD)), etc.

The above descriptions are merely specific implementations of the disclosure, but are not intended to limit the scope of protection of the disclosure. Any variation or replacement readily figured out by a person skilled in the art within the technical scope disclosed in the disclosure shall fall within the scope of protection of the disclosure. Therefore, the scope of protection of the disclosure shall be subject to the scope of protection of the claims.

## Claims

1. A method for communication, comprising:
receiving, by a terminal device, a power saving signal that indicates discontinuous reception (DRX) information, wherein a transmission parameter of the power saving signal is different from a transmission parameter of a physical channel, and the transmission parameter comprises at least one of: a waveform, a modulation mode, a coding mode or a multiple access mode; and
determining, by the terminal device, a reception state based on the DRX information.

2. The method of claim 1, wherein the modulation mode of the power saving signal comprises one of:
amplitude shift keying (ASK) modulation;
frequency shift keying (FSK) modulation; or
phase shift keying (PSK) modulation.

3. The method of claim 1, wherein the coding mode of the power saving signal comprises one of:
non-return-to-zero inverted (NRZI) coding;
Manchester coding;
uni-polar RZ coding;
differential bi-phase (DBP) coding;
Miller coding; or
differential coding.

4. The method of claim 1, wherein the multiple access mode of the power saving signal comprises one of:
frequency division multiple access (FDMA),
time division multiple access (TDMA); or
code division multiple access (CDMA).

5. The method of any one of claims 1 to 4, wherein the DRX information instructs the terminal device to enter into a DRX state, and
wherein determining, by the terminal device, the reception state based on the DRX information comprises:
entering, by the terminal device, into the DRX state based on the DRX information.

6. The method of claim 5, wherein entering, by the terminal device, into the DRX state based on the DRX information comprises:
entering, by the terminal device, into a first cycle state based on the DRX information.

7. The method of claim 6, wherein entering, by the terminal device, into the DRX state based on the DRX information comprises:
if the terminal device is configured with a second cycle, entering, by the terminal device, into a second cycle state based on the DRX information, wherein the second cycle is less than a first cycle.

8. The method of any one of claims 5 to 7, wherein the DRX information indicates a DRX command.

9. The method of any one of claims 1 to 4, wherein the DRX information instructs the terminal device to switch a DRX cycle, and
wherein determining, by the terminal device, the reception state based on the DRX information comprises:
determining, by the terminal device, the DRX cycle based on the DRX information.

10. The method of claim 9, wherein determining, by the terminal device, the DRX cycle based on the DRX information comprises:
switching, by the terminal device, from a second cycle state into a first cycle state based on the DRX information, wherein a second cycle is less than a first cycle.

11. The method of claim 9 or 10, wherein the DRX information indicates a long DRX command.

12. The method of claim 7 or 10, wherein the first cycle is a long DRX cycle and the second cycle is a short DRX cycle.

13. The method of any one of claims 1 to 4, wherein the DRX information instructs the terminal device to enter into a continuous reception state, and
wherein determining, by the terminal device, the reception state based on the DRX information comprises:
entering, by the terminal device, into the continuous reception state based on the DRX information.

14. The method of claim 13, wherein the method further comprises: after entering, by the terminal device, into the continuous reception state based on the DRX information,
acquiring, by the terminal device, first information that instructs the terminal device to enter into a DRX state; and
entering, by the terminal device, into the DRX state based on the first information.

15. The method of claim 13, wherein the method further comprises: after entering, by the terminal device, into the continuous reception state based on the DRX information,
acquiring, by the terminal device, second information that instructs the terminal device to switch a DRX cycle; and
entering, by the terminal device, into a long DRX cycle state based on the second information.

16. The method of claim 13, wherein the method further comprises: after entering, by the terminal device, into the continuous reception state based on the DRX information,
entering, by the terminal device, into a DRX state after a preset duration.

17. The method of any one of claims 1 to 4, wherein the DRX information indicates whether the terminal device monitors a physical downlink control channel (PDCCH) during a target on duration, and
wherein determining, by the terminal device, the reception state based on the DRX information comprises:
if the DRX information indicates that the terminal device monitors the PDCCH during the target on duration, entering, by the terminal device, into a continuous reception state during the target on duration; or
if the DRX information indicates that the terminal device does not monitor the PDCCH during the target on duration, maintaining, by the terminal device, a DRX state during the target on duration.

18. The method of any one of claims 1 to 17, wherein power for receiving the power saving signal consumed by the terminal device is less than power for receiving the physical channel consumed by the terminal device.

19. A method for communication, comprising:
sending, by a network device, a power saving signal that indicates discontinuous reception (DRX) information, wherein a transmission parameter of the power saving signal is different from a transmission parameter of a physical channel, and the transmission parameter comprises at least one of: a waveform, a modulation mode, a coding mode or a multiple access mode.

20. The method of claim 19, wherein the modulation mode of the power saving signal comprises one of:
amplitude shift keying (ASK) modulation;
frequency shift keying (FSK) modulation; or
phase shift keying (PSK) modulation.

21. The method of claim 19, wherein the coding mode of the power saving signal comprises one of:
non-return-to-zero inverted (NRZI) coding;
Manchester coding;
uni-polar RZ coding;
differential bi-phase (DBP) coding;
Miller coding; or
differential coding.

22. The method of claim 19, wherein the multiple access mode of the power saving signal comprises one of:
frequency division multiple access (FDMA);
time division multiple access (TDMA); or
code division multiple access (CDMA).

23. The method of any one of claims 19 to 22, wherein the DRX information instructs a terminal device to enter into a DRX state.

24. The method of claim 23, wherein the DRX information indicates a DRX command.

25. The method of any one of claims 19 to 22, wherein the DRX information instructs the terminal device to switch a DRX cycle.

26. The method of claim 25, wherein the DRX information indicates a long DRX command.

27. The method of any one of claims 19 to 22, wherein the DRX information instructs a terminal device to enter into a continuous reception state.

28. The method of any one of claims 19 to 22, wherein the DRX information indicates whether a terminal device monitors a physical downlink control channel (PDCCH) during a target on duration.

29. A device for communication, comprising:
a receiving unit, configured to receive a power saving signal that indicates discontinuous reception (DRX) information, wherein a transmission parameter of the power saving signal is different from a transmission parameter of a physical channel, and the transmission parameter comprises at least one of: a waveform, a modulation mode, a coding mode or a multiple access mode; and
a determining unit, configured to determine a reception state based on the DRX information.

30. The device of claim 29, wherein the modulation mode of the power saving signal comprises one of:
amplitude shift keying (ASK) modulation;
frequency shift keying (FSK) modulation; or
phase shift keying (PSK) modulation.

31. The device of claim 29, wherein the coding mode of the power saving signal comprises one of:
non-return-to-zero inverted (NRZI) coding;
Manchester coding;
uni-polar RZ coding;
differential bi-phase (DBP) coding;
Miller coding; or
differential coding.

32. The device of claim 29, wherein the multiple access mode of the power saving signal comprises one of:
frequency division multiple access (FDMA);
time division multiple access (TDMA); or
code division multiple access (CDMA).

33. The device of any one of claims 29 to 32, wherein the DRX information instructs the device to enter into a DRX state, and
wherein the determining unit is specifically configured to:
enter into the DRX state based on the DRX information.

34. The device of claim 33, wherein the determining unit is specifically configured to:
enter into a first cycle state based on the DRX information.

35. The device of claim 34, wherein the determining unit is specifically configured to:
if the device is configured with a second cycle, enter into a second cycle state based on the DRX information, wherein the second cycle is less than a first cycle.

36. The device of any one of claims 33 to 35, wherein the DRX information indicates a DRX command.

37. The device of any one of claims 29 to 32, wherein the DRX information instructs the device to switch a DRX cycle, and
wherein the determining unit is specifically configured to:
determine the DRX cycle based on the DRX information.

38. The device of claim 37, wherein the determining unit is specifically configured to:
switch from a second cycle state into a first cycle state based on the DRX information, wherein a second cycle is less than a first cycle.

39. The device of claim 37 or 38, wherein the DRX information indicates a long DRX command.

40. The device of claim 35 or 38, wherein the first cycle is a long DRX cycle and the second cycle is a short DRX cycle.

41. The device of any one of claims 29 to 32, wherein the DRX information indicates the device to enter into a continuous reception state, and
wherein the determining unit is specifically configured to:
enter into the continuous reception state based on the DRX information.

42. The device of claim 41, further comprising:
an acquiring unit, configured to acquire first information that instructs the device to enter into a DRX state; and
a processing unit, configured to enter into the DRX state based on the first information.

43. The device of claim 41, further comprising: an acquiring unit and a processing unit,
an acquiring unit, configured to acquire second information that instructs the device to switch a DRX cycle; and
a processing unit, configured to enter into a long DRX cycle state based on the second information.

44. The device of claim 41, further comprising:
a processing unit, configured to enter into a DRX state after a preset duration.

45. The device of any one of claims 29 to 32, wherein the DRX information indicates whether the device monitors a physical downlink control channel (PDCCH) during a target on duration, and
wherein the determining unit is specifically configured to:
if the DRX information indicates that the terminal device monitors the PDCCH during the target on duration, enter into a continuous reception state during the target on duration; or
if the DRX information indicates that the terminal device does not monitor the PDCCH within the target on duration, maintain a DRX state during the target on duration.

46. The device of any one of claims 29 to 45, wherein power for receiving the power saving signal consumed by the device is less than power for receiving the physical channel consumed by the device.

47. A device for communication, comprising:
a sending unit, configured to send a power saving signal that indicates discontinuous reception (DRX) information, wherein a transmission parameter of the power saving signal is different from a transmission parameter of a physical channel, and the transmission parameter comprises at least one of: a waveform, a modulation mode, a coding mode or a multiple access mode.

48. The device of claim 47, wherein the modulation mode of the power saving signal comprises one of:
amplitude shift keying (ASK) modulation;
frequency shift keying (FSK) modulation; or
phase shift keying (PSK) modulation.

49. The device of claim 47, wherein the coding mode of the power saving signal comprises one of:
non-return-to-zero inverted (NRZI) coding;
Manchester coding;
uni-polar RZ coding;
differential bi-phase (DBP) coding;
Miller coding; or
differential coding.

50. The device of claim 47, wherein the multiple access mode of the power saving signal comprises one of:
frequency division multiple access (FDMA);
time division multiple access (TDMA); or
code division multiple access (CDMA).

51. The device of any one of claims 47 to 50, wherein the DRX information instructs a terminal device to enter into a DRX state.

52. The method of claim 51, wherein the DRX information indicates a DRX command.

53. The device of any one of claims 47 to 50, wherein the DRX information instructs the terminal device to switch a DRX cycle.

54. The device of claim 53, wherein the DRX information indicates a long DRX command.

55. The device of any one of claims 47 to 50, wherein the DRX information instructs a terminal device to enter into a continuous reception state.

56. The device of any one of claims 47 to 50, wherein the DRX information indicates whether a terminal device monitors a physical downlink control channel (PDCCH) during a target on duration.

57. A communication device, comprising:
a memory, configured to store a program; and
a processor, configured to invoke the program from the memory to perform the method of any one of claims 1 to 18.

58. A communication device, comprising:
a memory, configured to store a program; and
a processor, configured to invoke the program from the memory to perform the method of any one of claims 19 to 28.

59. A communication device, comprising:
a processor, configured to invoke a program from a memory to perform the method of any one of claims 1 to 18.

60. A communication device, comprising:
a processor, configured to invoke a program from a memory to perform the method of any one of claims 19 to 28.

61. A chip, comprising:
a processor, configured to invoke a program from a memory, to cause a device on which the chip is mounted to perform the method of any one of claims 1 to 18.

62. A chip, comprising:
a processor, configured to invoke a program from a memory, to casue a device on which the chip is mounted to perform the method of any one of claims 19 to 28.

63. A computer-readable storage medium having stored thereon a program that, when executed by a computer, causes the computer to perform the method of any one of claims 1 to 18.

64. A computer-readable storage medium having stored thereon a program that, when executed by a computer, causes the computer to perform the method of any one of claims 19 to 28.

65. A computer program product comprising a program that causes a computer to perform the method of any one of claims 1 to 18.

66. A computer program product comprising a program that causes a computer to perform the method of any one of claims 19 to 28.

67. A computer program causing a computer to perform the method of any one of claims 1 to 18.

68. A computer program causing a computer to perform the method of any one of claims 19 to 28.
